Europäisches Patentamt

European Patent Office

Office européen des brevets

(11) Numéro de publication : **0 458 713 B1**

# (12) FASCICULE DE BREVET EUROPEEN

(45) Date de publication du fascicule du brevet :
**29.06.94 Bulletin 94/26**

(51) Int. Cl.$^5$ : **C03C 21/00**

(21) Numéro de dépôt : **91440036.1**

(22) Date de dépôt : **29.04.91**

(54) **Procédé pour minimiser la migration du plomb provenant d'un flacon en cristal vers un liquide contenu dans ce flacon.**

(30) Priorité : **23.05.90 EP 90440046**

(43) Date de publication de la demande :
**27.11.91 Bulletin 91/48**

(45) Mention de la délivrance du brevet :
**29.06.94 Bulletin 94/26**

(84) Etats contractants désignés :
**AT BE CH DE DK ES FR GB GR IT LI LU NL SE**

(56) Documents cités :
**PATENT ABSTRACTS OF JAPAN vol. 13, no. 562 (C-665)(3910) 13 Décembre 1989 & JP-A-01 234 345 (NIPPON SHEET GLASS CO ) 19 Septembre 1989
CHEMICAL ABSTRACTS, vol. 110, no. 12, 20 Mars 1989, Columbus, Ohio, US;abstract no. 100431Z, page 329 ;**

(56) Documents cités :
**CHEMICAL ABSTRACTS, vol. 107, no. 24, 14 Décembre 1987, Columbus, Ohio, US;abstract no. 221988, page 278 ;
World Patent Index Accession no. 85-307913, week 49, Derwent Publication Ltd. , London, GB**

(73) Titulaire : **COMPAGNIE DES CRISTALLERIES DE BACCARAT
BP.31
F-54120 Baccarat (FR)**

(72) Inventeur : **Cornier, Gérard
390 Chemin des Grandes Royes
F-88100 Sainte Marguerite (FR)**

(74) Mandataire : **Bossard, Jacques-René
Cabinet MEYER & COURTASSOL
Bureau EUROPE
20 Place des Halles
F-67000 Strasbourg (FR)**

Jouve, 18, rue Saint-Denis, 75001 PARIS

## Description

La présente invention concerne un procédé de traitement de la surface d'un objet solide réalisé en un matériau ayant une structure vitreuse et contenant une certaine teneur en métaux lourds, cette surface étant susceptible d'entrer en contact avec des liquides à caractère acide, en vue d'empêcher lesdits métaux lourds de migrer vers lesdits liquides.

Par "matériau ayant une structure vitreuse" on désignera essentiellement dans la présente description les verres au plomb, le cristal et autres matériaux de même nature utilisés sous forme massive, c'est à dire n'ayant pas de particularités superficielles, par "métaux lourds", on désignera les métaux tels que le plomb, le cadmium, le baryum et autres, qui peuvent représenter un danger pour la santé s'ils viennent de façon prolongée ou permanente au contact de boissons ou d'aliments.

Par "liquide à caractère acide", on entend aussi bien des alcools, tels que le cognac, le whisky, les alcools blancs, les vins ou les jus de fruits et analogues, que des produits pâteux très agressifs, tels que les moutardes et autres produits alimentaires acides.

Au titre d'exemple illustratif détaillé du procédé selon l'invention, on va exposer dans la suite l'application de ce procédé au traitement de récipients en cristal ou en verre au plomb, destinés notamment à contenir par exemple des alcools, en vue d'empêcher la migration vers lesdits alcools du plomb de la surface interne de ces récipients étant au contact desdits alcools.

Dans cet exemple, on désignera par le terme "verre au plomb", tout verre contenant une certaine proportion de plomb, y compris bien entendu le "cristal" proprement dit, c'est à dire contenant au moins 24 % d'oxyde de plomb.

On sait que tout liquide contenu dans un récipient tend à dissoudre, quel que soit le matériau de ce récipient, une certaine proportion des éléments chimiques constitutifs de ce matériau. Cette proportion est, évidemment, en général, extrêmement faible. Par exemple de l'eau contenue dans un verre sodocalcique dissout une certaine proportion du $Na_2O$ contenu dans ce verre. Un test normalisé (DIN 1211) permet de comparer la résistance hydrolytique des verres sodocalciques (dissolution de 30 à 1000 µg $Na_2O$ par g de verre sodocalcique réduit en poudre, placé dans l'eau à 90° C pendant une heure).

Ce phénomène général, s'il est à prendre en compte en chimie analytique et dans certaines branches de la chimie fine, est d'une manière générale sans incidence sur la vie pratique, sauf dans des cas très particuliers, tels que celui de certains métaux lourds comme le cadmium, le baryum et le plomb qui tendent à "migrer" dans les produits alimentaires quand ils entrent dans la composition des matériaux utilisés pour des ustensiles de cuisine ou quand ils sont en contact avec des liquides. Plus particulièrement encore, le cristal contient de l'oxyde de plomb, (Norme AFNOR : NF 30.004) et l'on a pu constater que des quantités de plomb, pouvant atteindre quelques ppm, peuvent migrer dans des milieux acides (pH environ 3,5) lorsque ceux-ci sont conservés dans des récipients de cristal pendant un temps assez long.

Ce phénomène a d'ailleurs fait l'objet d'études approfondies, qui ont conduit à l'élaboration de normes de contrôle en vue "d'assurer que la population soit protégée contre les dangers éventuels dus à un contact des aliments avec la surface des articles en verre employés pour la préparation, le service et la conservation des aliments et des boissons" (Norme Internationale ISO 7086/1-1982).

Ainsi, dans certains pays, les autorités compétentes en matière de santé ont maintenant tendance à préconiser des teneurs maximales en plomb dans les boissons alcoolisées, ce qui risque de poser un problème à la fois aux fabricants de flacons et carafes en cristal et aux négociants en alcools de prix tels que le cognac, le whisky et analogues, qui souhaitent présenter leurs produits dans ces flacons.

Une première solution à ce problème a été apportée par la Déposante elle-même sous forme d'un procédé faisant l'objet de la demande brevet français FR-A-2 267 768 et conduisant à un récipient en cristal, destiné à contenir tous produits à caractère acide, et qui est caractérisé en ce qu'en vue d'empêcher la migration du plomb du verre vers lesdits produits, ledit récipient comporte sur sa surface interne une pellicule mince continue de verre sans plomb, formant "écran".

Dans sa mise en pratique, ce procédé consiste, préalablement au façonnage d'une paraison de cristal, à prélever une quantité très faible de verre sans plomb, puis à cueillir, par dessus, la paraison de cristal, qui vient alors adhérer au verre sans plomb, de manière que, lors du façonnage, le verre se trouve fortement distendu et habille d'une couche très mince tout l'intérieur de la pièce.

Bien que la solution précédente soit parfaitement satisfaisante dans ses résultats, des études ont été poursuivies dans le but de trouver une autre solution encore.

L'invention consiste, dans l'application faisant l'objet du présent exemple, dans un nouveau procédé visant à atteindre le même but, c'est à dire à empêcher la migration des ions plomb du verre au plomb ou du cristal dont est fait un récipient vers un produit ou milieu acide, tel qu'un liquide contenu dans ce récipient. Ce procédé repose sur un principe complètement différent du procédé rappelé ci-dessus et qui consiste non plus à isoler

2

le verre du liquide, mais à créer, dans la zone superficielle du verre, destinée à venir au contact du liquide, et après avoir enlevé en partie les ions plomb contenus dans cette zone superficielle, une barrière de diffusion empêchant le passage, vers le milieu, des ions plomb contenus dans le cristal.

Le moyen utilisé pour provoquer ce phénomène relève de la technique, déjà ancienne, de l'échange d'ions, et plus spécialement ici, de l'échange de cations entre le verre, contenant des cations plomb et alcalins et une substance contenant des cations $H^+$ et $Al^{3+}$ amenés au contact du cristal, et cela dans des conditions déterminées.

On sait en effet que l'attaque hydrolytique des verres en milieu acide peut être représentée par un échange ionique entre les ions $H^+$ en excès dans une solution et les cations mobiles du réseau vitreux, la silice demeurant pratiquement inattaquée. Un tel échange est pratiquement limité aux modificateurs de réseau (métaux alcalins et alcalino-terreux) et à certains métaux lourds tels que le plomb, le cadmium ou le baryum (dans la mesure où ils sont présents dans le solide).

Partant de cette donnée de base, on a déjà cherché à limiter la migration du plomb, par diverses méthodes qui consistent à enlever le plomb d'une couche de diffusion superficielle d'épaisseur variable de la paroi d'un article au moyen de solutions aqueuses acides, préalablement à l'utilisation de cet article. L'inconvénient de ces méthodes réside dans les opérations et manutentions supplémentaires qu'elles occasionnent et surtout dans la médiocrité des résultats, si l'on veut en même temps respecter les contraintes de sécurité et de délais compatibles avec la fabrication industrielle.

En effet, dans le domaine des compositions de verre au plomb et de cristal, la cinétique d'échange ionique entre le plomb de la paroi et les cations d'un liquide, est régie par la seconde loi de Fick, à savoir que la quantité de plomb passant en solution est proportionnelle à la racine carrée de la durée du contact, tandis que, de son côté, le coefficient de diffusion est une fonction d'ARRHENIUS de la température. D'autre part, la lixiviation des récipients par des solutions acides ne peut être effectuée qu'à des températures relativement basses, inférieures aux températures d'ébullition des liquides utilisés, dans les conditions d'emploi et sur des durées de contact limitées par des contraintes d'exploitation industrielle. Au surplus, les contraintes de sécurité en atelier rendent délicate dans la pratique l'utilisation d'acides très concentrés.

Il en résulte que, dans tous les cas, la quantité de plomb effectivement extrait est relativement très faible et qu'un nouveau contact d'un liquide acide avec un récipient ainsi traité se traduit à nouveau par une diffusion de plomb dans le liquide, mesurable dès quelques jours : la vitesse de diffusion reste à peu près la même qu'avant traitement et il y a simplement un petit décalage dans le temps du phénomène, ce décalage étant insuffisant par rapport aux durées de stockage. En effet par exemple, dans le cas des alcools conservés en carafes de cristal, ces durées peuvent atteindre plusieurs années.

Le présent procédé s'écarte fondamentalement de ces méthodes, et permet d'empêcher la migration depuis une paroi en verre au plomb ou en cristal du plomb qui serait susceptible de migrer vers le liquide, et cela soit au cours d'un contact prolongé, comme dans le cas des alcools, soit au cours de contacts courts avec des milieux fortement acides tels que les préparations contenant du vinaigre (moutardes, sauces).

Pour parvenir à cette amélioration du résultat recherché, le procédé selon l'invention repose d'une part sur l'utilisation de températures élevées, et d'autre part sur l'emploi de composés susceptibles d'échanger des ions $H^+$ et $Al^{3+}$ jusqu'à ces températures.

Dans la pratique, le présent exemple vise un procédé pour l'élimination du plomb dans une zone superficielle d'un récipient en verre au plomb ou en cristal, déjà terminé ou en cours d'élaboration, ce procédé consistant à déposer sur la surface dudit récipient destinée à être au contact du milieu acide d'une barbotine thixotropique à l'état de liquide visqueux, à vider ledit récipient, en laissant subsister sur la paroi à traiter un dépôt continu dudit liquide adhérant à cette surface, à chauffer ledit corps comportant ce dépôt à une température comprise entre 300° C et la température de ramollissement du verre au plomb ou du cristal dont est fait ledit récipient pendant quelques heures, puis, après refroidissement, à éliminer par lavage la croûte silico-alumineuse résultant du chauffage dudit dépôt.

Par barbotine, on entend ici une suspension thixotropique de composés tels que les phyllosilicates ou les tectosilicates, auxquels se rattachent par exemple les argiles, les kaolins, les montmorillonites et les zéolites, à savoir essentiellement un silicate d'aluminium hydraté qui conserve de l'eau de constitution jusqu'à haute température, moment auquel la diffusion des cations du cristal par échange avec les cations de l'argile se produit avec une vitesse suffisamment élevée, compatible avec les délais raisonnables de réalisation industrielle.

Une première explication possible de ce phénomène sur lequel repose le procédé selon l'invention serait la suivante :

Ces solides cristallins sont tous caractérisés par des agencements structuraux en couches tétraédriques ou octaédriques dont le bilan des charges électriques est déficient en charges positives par suite de la substitution aux cations $Si^{4+}$ d'autres cations moins chargés tels que $Al^{3+}$. L'excédent de charges négatives est alors compensé par d'autres cations, principalement monovalents (H$^+$, métaux alcalins) ou quelquefois bivalents (métaux alcalino-terreux). Ces cations "compensateurs" sont échangeables par d'autres espèces : le nombre de charges négatives ainsi compensées par les cations échangeables est désigné par "capacité d'échange cationique" (CEC) ou "capacité d'échange de bases" (BEC).

Il convient de noter que dès 1945, (cf "the Glass Industry", vol. 26 nb 6, juin 1945, nb 7 juillet 1945 et nb 6 juin 1947), certains auteurs avaient bien mis en évidence une possibilité d'échange ionique à haute température entre les ions H$^+$ du métakaolin et les métaux alcalins des verres sodo-calciques et en avaient même envisagé une application, à savoir l'amélioration de la durabilité ou de certaines propriétés (mécaniques et électriques) des verres sodocalcique. Cependant, les manipulations supplémentaires occasionnées par un tel procédé ont conduit leurs auteurs à y renoncer, d'autant que les mêmes résultats pouvaient être atteints par d'autres moyens, plus commodes.

Ces études antérieures ont donc été limitées à l'échange entre le sodium des verres sodocalciques et l'ion H$^+$ du métakaolin, étant constaté au surplus que la différence entre un tel échange ionique à haute température et la lixiviation à température ordinaire mentionnée plus haut se situerait dans la cinétique du processus d'une part et dans l'état de la surface obtenue après traitement d'autre part.

Ainsi, on a pu établir qu'avec le procédé selon l'invention, aux températures indiquées, comprises entre 300° C et la température de ramollissement du verre au plomb ou du cristal dont est fait ledit article, un contact de quelques heures seulement suffit à provoquer la diffusion vers ladite croûte silico-alumineuse, d'une certaine quantité de plomb du verre ou du cristal.

En réalité, les analyses de surface par spectrométries ESCA et SIMS ont révélé qu'au cours dudit procédé s'instaure en plus un échange complexe entre les ions K$^+$ et Pb$^{2+}$ du cristal d'une part et les ions Al$^{3+}$ du Kaolin d'autre part, cet échange, donc plus complexe que celui sur lequel reposait l'hypothèse précédente donnant naissance, dans la paroi d'un récipient en cristal, à une couche superficielle silico-alumineuse d'une épaisseur d'environ 100 nanomètres (1000 Ångstroms) qui constitue une barrière interfaciale s'opposant à l'inter-diffusion des ions Pb$^{2+}$ du solide et des ions H$^+$ du liquide acide au contact. L'alumine apportée par le kaolin participe à la constitution de cette couche superficielle très stable, qui persiste après un traitement thermique à 120°C pendant dix sept heures, correspondant à un vieillissement à température ambiante de plusieurs dizaines d'années, à l'atmosphère ambiante sans contact avec un liquide.

La croûte silico-alumineuse demeurant sur la paroi à l'issue du procédé est éliminée par exemple par lavage à l'eau, complété par une finition, par exemple un lavage au sable, un traitement par ultra-sons ou analogues.

Un avantage de ce procédé réside dans le caractère précis de ses conditions d'application, qui le rendent opérationnel sur des machines industrielles, sur n'importe quel corps en verre au plomb ou en cristal.

On va maintenant illustrer l'invention en se référant à un certain nombre de cas pratiques démontrant l'efficacité du procédé.

Exemple 1 :

Cet exemple se réfère à un cas particulier d'application du procédé selon l'invention au traitement des carafes en cristal à 30 % de plomb destinées à recevoir du cognac.

Ces carafes ayant une contenance de 750 ml, on prépare une barbotine constituée par du kaolin, commercialement disponible et vendu en France par la Société Lambert Rivière sous la désignation "Kaolin Heavy", à haute pureté, les limites maximales des impuretés étant :

| | |
|---|---|
| Calcium | 250 ppm |
| Métaux lourds | 25 ppm |
| Chlorures | 250 ppm |
| Sulfates | 0,1 % en poids |
| Substances solubles à l'acide | 10 mg |

Les autres caractéristiques physiques et chimiques étant conformes à la pureté exigée par la Pharmacopée Européenne de 1974.

Après mélange intime dans un mortier d'environ 53 % d'eau et 47 % de kaolin, la barbotine est introduite dans la carafe et celle-ci est agitée pour créer une pellicule de barbotine sur la totalité de la surface interne. L'excédent est vidé par gravité.

La thixotropie de la barbotine permet ainsi d'enduire la surface totale du flacon d'une couche uniforme sans qu'il y ait écoulement ultérieur, notamment au revidage.

La carafe est alors portée au four et on effectue une montée progressive de la température jusqu'à 400-440° C que l'on maintient en palier pendant 4-6 heures, puis on refroidit lentement.

On élimine alors la barbotine par lavage, à l'eau d'abord qui entraîne la plus grande partie, puis avec une suspension de sable pour décrocher les traces ou le voile qui subsiste encore, de sorte que l'article recouvre son aspect initial.

On notera que les températures utilisées sont proches du point de contrainte du cristal (environ 440° C), mais inférieures, pour éviter l'altération de la surface ou une adhérence excessive du kaolin après refroidissement.

D'une manière plus générale, on notera que la proportion d'eau dans la barbotine pourra assez largement varier, en fonction de nombreux facteurs tels que :

- la nature du kaolin utilisé,
- sa granulométrie,
- le mode d'application (pâte appliquée au pinceau ou suspension fluide),
- les additifs assurant sa thixotropie,
- la forme géométrique de l'article (plat ou creux).

Un intervalle d'environ 40 à 60 % en poids apparaît raisonnable.

Pour soumettre le récipient ainsi traité à un essai comparatif de durabilité, on le remplit d'une solution aqueuse à 4 % d'acide acétique et on mesure par absorption atomique la concentration en plomb de cette solution, à intervalles d'environ 24 heures.

On effectue simultanément des mesures identiques sur une carafe identique, mais n'ayant pas subi le traitement selon l'invention.

Après 750 heures de contact (un mois), on observe les résultats suivants:

| Carafe | Teneur en Pb de la solution |
|---|---|
| Traitée | non détecté |
| Non-traitée | 1,70 mg/l |

L'efficacité du procédé est donc démontrée.

Par ailleurs, on a mesuré la quantité de plomb qui a migré dans le kaolin au cours du traitement. Cette quantité est de 2 à 3 mg.

Les exemples suivants ont pour but de démontrer que l'efficacité du même traitement est suffisante pour que les liquides conservés dans les flacons traités demeurent conformes aux exigences sanitaires.

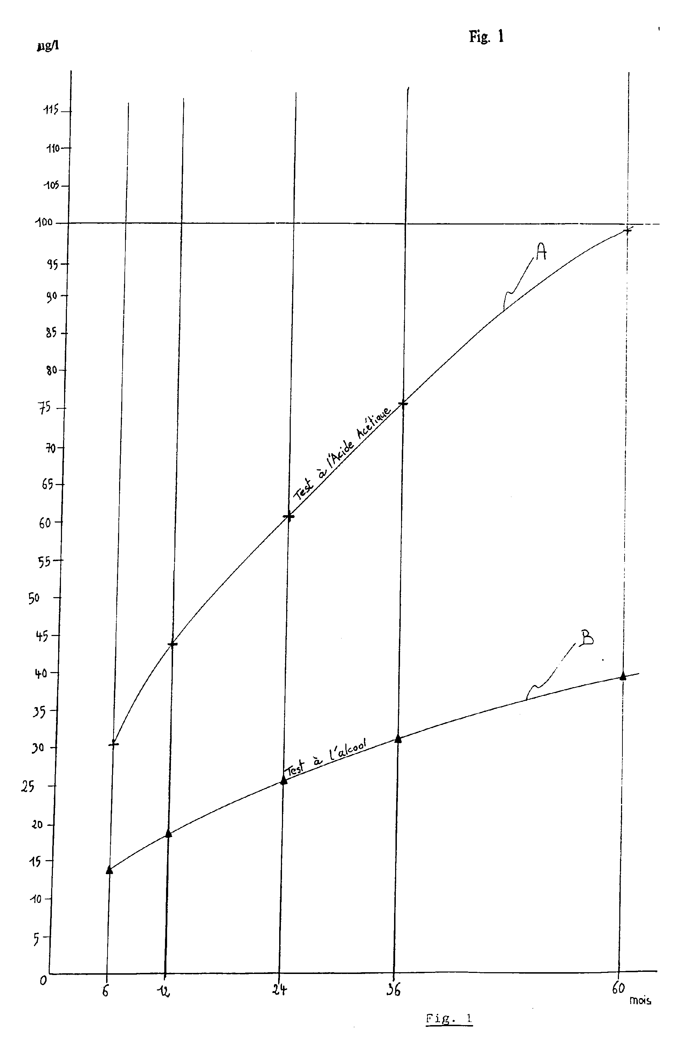

A cet effet, dans une série d'essais poursuivis pendant 6, 12, 24, 36 et 60 mois (cinq ans) en utilisant comme liquide l'acide acétique à 4 % (pH = 2,30) et un alcool du commerce (pH = 3,5), les résultats obtenus ont été les suivants, tels que réunis au tableau I ci-après, et illustrés par les courbes réunies au schéma de la figure 1 :

## TABLEAU I

A = tests à l'acide acétique à 4 % selon le processus de l'exemple 1.

B = tests à l'alcool (à teneur initiale propre en plomb de 16,8 µg/l)

| Teneur du liquide en plomb (µg/l) | DURÉE DE L'ESSAI | | | | |
|---|---|---|---|---|---|
| | 6 mois | 12 mois | 24 mois | 36 mois | 5 ans |
| A (Tests à l'acide acétique) | 31,0 | 43,8 | 62,0 | 76 | 98 |
| B (Tests à l'alcool) | 13 | 18,3 | 25,9 | 31,6 | 40 |

Ces résultats (Tableau I et courbes A et B correspondantes) appellent les commentaires suivants :

En premier lieu, le test à cinq ans est une garantie presque superflue. En effet, l'age d'un alcool tel que du cognac, tel qu'indiqué sur un flacon en cristal, ne signifie nullement qu'il est demeuré dans ce flacon pendant tout son vieillissement, lequel, en fait, a normalement lieu en bonbonne ou en fût de chêne : la carafe n'est remplie qu'au moment de la commercialisation du cognac, quel que soit son âge, et la durée effective du contact entre l'alcool et le cristal n'est en réalité que la durée de l'offre à l'étalage du détaillant, puis la durée

5

de consommation par l'acheteur, qui, logiquement, dépasse rarement quelques mois, et au plus quelques années. C'est pourquoi les tests réunis ci-dessus on été effectués en temps réel jusqu'à 12 mois, puis en tests accélérés jusqu'à 36 mois et enfin extrapolés à 5 ans conformément à la loi de Fick, universellement admise dans le domaine de la migration des ions, dont l'importance s'évalue en fonction de la racine carrée de la durée.

En second lieu, on notera que les quantités de plomb passant en solution sont sensiblement moins élevées dans l'alcool que dans l'acide acétique. Cela s'explique par le pH plus élevé et la présence d'autres constituants dans l'alcool.

Enfin, et c'est l'observation la plus importante, on constate que la teneur en plomb la plus élevée dans l'alcool atteinte au bout de cinq années, n'est que de 40 µg/l, soit encore plus de deux fois inférieure à la teneur maximale la plus sévère préconisée à ce jour.

On peut donc affirmer que le procédé selon l'invention appliqué dans les circonstances les plus extrêmes garantit le respect des législations les plus exigeantes.

En conclusion, il apparaît que le procédé selon l'invention permet d'atteindre efficacement le résultat recherché, c'est à dire d'empêcher la migration des cations de métaux lourds d'une substance vitreuse tel que le cristal vers un liquide au contact d'une surface en cristal, par exemple un alcool tel que le cognac contenu dans un flacon de cristal.

Il est bien entendu que la présente invention repose sur la constatation expérimentale des résultat de la mise en oeuvre du procédé qui vient d'être décrit et illustré par les exemples et ne saurait être limitée par aucune théorie ou explication hypothétique. Dans l'état actuel de l'expérimentation, ainsi, on ne peut que rappeler les différentes composantes hypothétiques plausibles d'une explication de l'efficacité de ce procédé, ces composantes étant :

1. L'échange simple $H^+/Pb^{2+}$ entre le cristal et le kaolin. Cet "épuisement" superficiel du plomb du cristal minimiserait effectivement sa migration ultérieure vers le liquide.

2. Un échange beaucoup plus complexe entre les principaux cations du cristal et du kaolin, qui serait à l'origine de la formation d'une barrière de diffusion silico-alumineuse dans la zone superficielle du cristal, cette barrière s'opposant à la migration ultérieure du plomb encore présent dans le cristal.

Il est parfaitement plausible que ces composantes soient concomitantes, la première prévalant au début du traitement, c'est à dire qu'il y aurait bien d'abord, en l'absence de toute barrière, migration du plomb vers le kaolin, cet épuisement superficiel du cristal étant en lui-même une forme de résultat favorable, puis à mesure du déroulement de l'opération, naissance et développement de la barrière, s'opposant à toute migration ultérieure du plomb restant encore présent dans le cristal vers le liquide.

## Revendications

1. Procédé de traitement de la surface d'un objet solide réalisé en un matériau ayant une structure vitreuse et notamment le cristal, le verre au plomb et analogues et contenant une certaine teneur en métaux lourds, et notamment le plomb
caractérisé en ce qu'il consiste à provoquer dans une zone superficielle de ladite surface destinée à venir au contact du liquide, et après avoir enlevé en partie les ions plomb contenus dans cette zone superficielle, la formation d'une barrière de diffusion silico-alumineuse, s'opposant à cette migration, vers le liquide, par échange d'ions entre ledit matériau solide à structure vitreuse et un revêtement appliqué temporairement à ladite surface, ce revêtement consistant lui-même en une croûte silico-alumineuse résultant du chauffage à une température comprise entre 300°C et la température de ramollissement du verre ou du cristal pendant quelques heures d'une couche de silicate d'aluminium hydraté pur appliquée à ladite surface sous forme d'une barbotine thixotropique.

2. Procédé selon la revendication 1, caractérisé en ce que la barbotine est constituée par une suspension aqueuse visqueuse d'un composé choisi entre les phyllosilicates et les tectosilicates, tel que du kaolin, ou tout autre composé contenant essentiellement un silicate d'aluminium hydraté aussi pur que possible.

3. Procédé selon l'une des revendications 1 et 2, caractérisé en ce que la barbotine consiste en une suspension de Kaolin dans l'eau et la pellicule de cette barbotine déposée sur ladite surface est traitée à 400-440° C pendant 4-6 heures.

4. Procédé selon la revendication 3, caractérisé en ce que la proportion en poids entre l'eau et le kaolin est comprise entre 40 % et 60 % d'eau.

5. Procédé selon l'une quelconque des revendications 1 à 4 à l'élimination du plomb dans une zone superficielle de la paroi d'un article creux en cristal ou en verre au plomb terminé ou en cours d'élaboration, caractérisé en ce qu'il consiste :

- à remplir ce corps creux d'une barbotine thixotropique à l'état de liquide visqueux,
- à vider ledit corps tout en laissant subsister sur sa paroi interne un dépôt continu dudit liquide visqueux adhérant à cette surface,
- à chauffer ledit corps portant ce dépôt à une température comprise entre 300° C et la température de ramollissement du verre ou du cristal dont est fait ledit article pendant quelques heures,
- à laisser ledit corps refroidir,
- et à éliminer par lavage à l'eau puis au sable ou traitement par ultrasons la croûte silico-alumineuse chargée d'ions plomb résultant du chauffage dudit dépôt.

6. Article en cristal ou en verre au plomb et ayant été traité par le procédé selon l'une quelconque des revendications 1 à 5.

## Patentansprüche

1. Verfahren zur Behandlung eines festen Gegenstandes ausgeführt auf einem Material mit einer glasartigen Struktur und besonders auf Kristall, auf Bleiglas und Analogen mit einem bestimmten Gehalt an Schwermetallen, besonders Blei,
dadurch gekennzeichnet,
daß es daraus besteht, in einem oberflächlichen Bereich, die dazu bestimmt ist, in Kontakt mit Flüssigkeit zu kommen, und danach einen Teil der Bleiionen abgegeben hat, die in diesem Oberflächenbereich enthalten sind, eine aluminiumsilikathaltige Diffusionsbarriere gegenüber der Flüssigkeit zu bilden, die diesem Entweichen entgegensteht, durch einen Ionenaustausch zwischen besagtem festem Material von glasartiger Struktur und einem auf besagter Oberfläche zeitweise aufgetragenen Überzug, dieser Überzug besteht seinerseits aus einem aluminiumsilikathaltigen Belag, der sich durch Erwärmen einer Schicht aus reinem hydratisiserten Aluminiumsilikat für einige Stunden auf eine Temperatur zwischen 300 °C und der Erweichungstemperatur des Glases oder des Kristalls ergibt, der Belag ist auf besagte Oberfläche in der Form einer thixotropen Masse (barbotine) aufgetragen.

2. Verfahren nach Anspruch 1, dadurch gekennzeichnet, daß die Masse (barbotine) aus einer wässrigen, viskosen Suspension gebildet wird, mit einer Zusammensetzung ausgewählt zwischen Phyllosilikaten oder Tektosilikaten, wie Kaolin oder jeder anderen Zusammensetzung, das im Wesentlichen ein hydratisiertes Aluminiumsilikat, ebenfalls so rein wie möglich, enthält.

3. Verfahren nach einem der Ansprüche 1 und 2, dadurch gekennzeichnet, daß die Masse (barbotine) aus einer Suspension von Kaolin in Wasser besteht und daß der auf die besagte Oberfläche aufgebrachte Film dieser Masse (barbotine) während 4-6 Stunden bei 400-440 °C behandelt wird.

4. Verfahren nach Anspruch 3, dadurch gekennzeichnet, daß das Gewichtsverhältnis zwischen Wasser und Kaolin zwischen 40 % und 60 % Wasser umfasst.

5. Verfahren nach irgendeinem der Ansprüche 1 bis 4 zur Elimination von Blei in einem oberflächlichen Bereich der Wandung eines Hohlkörpers aus Kristall oder Bleiglas, der bereits fertig oder in Verarbeitung ist, dadurch gekennzeichnet, daß es besteht aus:

- dem Auffüllen des Hohlkörpers mit einer thixotropen Maase (barbotine), die sich im Zustand einer viskosen Flüssigkeit befindet,
- dem völligen Entleeren des besagten Hohlkörpers, indem auf der inneren Wandung ein Depot belassen wird, das aus besagter viskoser Flüssigkeit besteht, die dieser Oberfläche anhaftet,
- dem Erwärmen des besagten Hohlkörpers, der dieses Depot trägt, auf eine Temperatur, die zwischen 300 °C und der Erweichungstemperatur des Glases oder Kristalls, aus dem der Hohlkörper besteht, für mehrere Stunden,
- dem Abkühlenlassen des besagten Körpers,
- und dem Eliminieren durch Waschen mit Wasser und dann mit Sand oder durch Ultraschallbehandlung des mit Bleiionen geladenen Aluminiumsilikatüberzugs, das sich aus der Erwärmung des besagten Depots ergibt.

**6.** Gegenstand aus Blei oder Kristallglas und der nach irgendeinem der Verfahren der Ansprüche 1 bis 5 behandelt wurde.

## Claims

**1.** Process for treating the surface of a solid object made from a material with a vitreous structure and in particular crystal, lead glass and the like and having a certain heavy metal, and in particular lead, content, characterised in that it consists of causing, in a superficial area of the said surface intended to come into contact with the liquid, and after partly removing the lead ions contained in this superficial area, the formation of a silico-aluminous diffusion barrier, opposing this migration towards the liquid, by an exchange of ions between the said solid material with a vitreous structure and a coating applied temporarily to the said surface, this coating itself consisting of a silico-aluminous skin resulting from the heating, at a temperature between 300°C and the softening temperature of the glass or crystal, for a few hours, of a layer of pure hydrous aluminium silicate applied to the said surface in the form of a thixotropic slip.

**2.** Process according to Claim 1, characterised in that the slip consists of a viscous aqueous suspension of a compound chosen from among the phyllosilicates and tectosilicates, such as kaolin, or any other compound containing essentially hydrous aluminium silicate which is as pure as possible.

**3.** Process according to Claims 1 or 2, characterised in that the slip consists of a suspension of kaolin in water and the film of this slip deposited on the said surface is treated at 400°-440°C for 4-6 hours.

**4.** Process according to Claim 3, characterised in that the proportion by weight between the water and the kaolin is between 40% and 60% water.

**5.** Process according to any one of Claims 1 to 4 for the elimination of lead in a superficial area of the wall of a hollow article made of crystal or lead glass which is finished or in the process of being manufactured, characterised in that it consists of:
   - filling this hollow body with a thixotropic slip in a viscous liquid state,
   - emptying the said body while allowing a continuous deposit of the said viscous liquid adhering to this surface to remain on its inner wall,
   - heating the said body bearing this deposit for a few hours at a temperature between 300°C and the softening temperature of the glass or crystal from which the said article is made,
   - allowing the said body to cool,
   - eliminating, by washing in water and then in sand or by ultrasonic treatment, the silico-aluminous skin charged with lead ions resulting from the heating of the said deposit.

**6.** Article made of crystal or lead glass and which has been treated by the process according to any one of Claims 1 to 5.

Fig. 1

µg/l

Fig. 1

9